(19) Europäisches Patentamt
European Patent Office
Office européen des brevets

(11) **EP 2 587 713 B1**

(12) **EUROPÄISCHE PATENTSCHRIFT**

(45) Veröffentlichungstag und Bekanntmachung des Hinweises auf die Patenterteilung:
**10.12.2014 Patentblatt 2014/50**

(51) Int Cl.:
*H04L 9/00* *(2006.01)*  *H04L 9/30* *(2006.01)*

(21) Anmeldenummer: **12007344.0**

(22) Anmeldetag: **25.10.2012**

(54) **Effiziente modulare Inversion mit Primzahltest**

Efficient modular inversion with prime number test

Inversion modulaire efficace avec test de primalité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2011 DE 102011117237**

(43) Veröffentlichungstag der Anmeldung:
**01.05.2013 Patentblatt 2013/18**

(73) Patentinhaber: **Giesecke & Devrient GmbH 81677 München (DE)**

(72) Erfinder: **Pulkus, Jürgen 80469 München (DE)**

(56) Entgegenhaltungen:
**US-A1- 2009 245 507**

- **Jörg Arndt: "Modular arithmetic and some number theory" In: "Matters Computational: Ideas, Algorithms, Source Code", 20. Oktober 2010 (2010-10-20), Springer Berlin Heidelberg, XP055075726, ISBN: 978-3-64-214763-0 Seiten 764-821, DOI: 10.1007/978-3-642-14764-7_39, * Abschnitt 39.1.4, "Division and modular inversion"; Seiten 767-768 * * Abschnitt 39.4, "The Chinese Remainder Theorem (CRT)"; Seiten 772-774 * * Abschnitte 39.10, "The Rabin-Miller test for compositeness", und 39.11, "Proving primality"; Seiten 786-804 ***
- **MARIJKE DE SOETE ED - BART PRENEEL ET AL: "Public key cryptography", 21. Mai 1991 (1991-05-21), COMPUTER SECURITY AND INDUSTRIAL CRYPTOGRAPHY, SPRINGER BERLIN HEIDELBERG, BERLIN, HEIDELBERG, PAGE(S) 31 - 49, XP019197543, ISBN: 978-3-540-57341-8 * Seite 33, Zeile 1 - Seite 44, Zeile 11 ***

**Beschreibung**

Die Erfindung betrifft allgemein das technische Gebiet der effizient implementierbaren kryptographischen Verfahren. Spezieller betrifft die Erfindung ein Verfahren, das sowohl einen Primzahltest als auch eine modulare Inversion bezüglich der getesteten Zahl ausführt. Besonders eignet sich die Erfindung zur Verwendung in einem tragbaren Datenträger. Ein solcher tragbarer Datenträger kann z.B. eine Chipkarte (*smart card*) in unterschiedlichen Bauformen oder ein Chipmodul oder ein vergleichbares ressourcenbeschränktes System sein.

Effiziente Verfahren zur Primzahlermittlung sind für viele kryptographische Anwendungen erforderlich. So müssen z.B. zur Schlüsselgenerierung bei dem im US-Patent 4,405,829 beschriebenen RSA-Verfahren zwei geheime Primzahlen festgelegt werden, deren Produkt einen Teil des öffentlichen Schlüssels bildet. Die Größe dieser Primzahlen hängt von den Sicherheitsanforderungen ab und beträgt in der Regel mehrere hundert bis einige tausend Bit. Voraussichtlich wird die geforderte Größe in Zukunft noch deutlich ansteigen.

Insgesamt ist die Primzahlsuche der mit Abstand rechenintensivste Schritt bei der RSA-Schlüsselgenerierung. Aus Sicherheitsgründen wird oft gefordert, dass die Schlüsselgenerierung durch den Datenträger selbst ausgeführt wird. Je nach dem Typ das Datenträgers kann dieser Vorgang während der Produktion des Datenträgers (z.B. der Komplettierung oder Initialisierung oder Personalisierung) einen Zeitaufwand verursachen, der stark variiert und gegebenenfalls mehrere Minuten betragen kann. Da Produktionszeit teuer ist, stellt die zur Schlüsselgenerierung erforderliche Zeit einen erheblichen Kostenfaktor dar. Es ist daher wünschenswert, die Schlüsselgenerierung zu beschleunigen und damit den erzielbaren Durchsatz einer Produktionsanlage für tragbare Datenträger zu erhöhen.

Ein wichtiger Schritt zur Verringerung der Produktionszeit ist es, ein effizientes Verfahren zur Primzahlsuche zu verwenden, das ferner einige Randbedingungen hinsichtlich der erzeugten Primzahlen erfüllt. Derartige Verfahren sind bereits vorgeschlagen worden und beispielsweise aus den Offenlegungsschriften DE 10 2004 044 453 A1 und EP 1 564 649 A2 bekannt.

Bei RSA-Verfahren sind auch die nach der Schlüsselgenerierung erfolgenden Ver- und Entschlüsselungsvorgänge relativ rechenaufwendig. Insbesondere für tragbare Datenträger mit ihrer beschränkten Rechenleistung wird daher oft eine Implementierung eingesetzt, die bei der Entschlüsselung und der Signaturerzeugung den Chinesischen Restklassensatz (CRT = *Chinese remainder theorem*) verwendet und daher auch als RSA-CRT-Verfahren bezeichnet wird. Durch Verwendung des RSA-CRT-Verfahrens reduziert sich der für die Entschlüsselung und Signaturerzeugung erforderliche Rechenaufwand ungefähr um den Faktor 4.

Zur Vorbereitung des RSA-CRT-Verfahrens werden bei der Bestimmung des privaten Schlüssels neben den beiden geheimen RSA-Primfaktoren weitere Werte berechnet und als Parameter des privaten Schlüssels abgespeichert. Nähere Informationen hierzu sind beispielsweise in der Offenlegungsschrift WO 2004/032411 A1 enthalten. Da die Berechnung der weiteren RSA-CRT-Schlüsselparameter in der Regel ebenfalls während der Produktion des tragbaren Datenträgers ausgeführt wird, ist es wünschenswert, auch hierfür möglichst effiziente Verfahren zu verwenden.

Viele tragbare Datenträger enthalten Koprozessoren, die bestimmte Berechnungsvorgänge unterstützen. Da Langzahldivision im Vergleich zu Langzahlmultiplikation recht aufwendig ist, sind insbesondere Datenträger bekannt, deren Koprozessoren eine als Montgomery-Multiplikation bekannte Operation unterstützen, die in dem Artikel ″Modular multiplication without trial division″ von Peter L. Montgomery, erschienen in Mathematics of Computation, Vol. 44, Nr. 170, April 1985, Seiten 519-521 beschrieben ist.

Die Erfindung hat demgemäß die Aufgabe, eine effiziente Technik zur Bestimmung eines modularen Inversen eines ersten Wertes bezüglich eines zweiten Wertes als Modul in Verbindung mit einem probabilistischen Primzahltest des zweiten Wertes bereitzustellen.

Erfindungsgemäß wird diese Aufgabe gelöst durch den Gegenstand der unabhängigen Ansprüche. Die abhängigen Ansprüche betreffen optionale Merkmale einiger Ausgestaltungen der Erfindung.

Die Erfindung geht von der Grundüberlegung aus, eine modulare Potenzberechnung durchzuführen, deren Basis von dem ersten Wert abhängt und deren Modulus und Exponent von dem zweiten Wert abhängt und deren Ergebnis - oder ein davon abgeleiteter Wert - sowohl für die Bestimmung des modularen Inversen des ersten Wertes als auch für den probabilistischen Primzahltest des zweiten Wertes herangezogen wird. Auf diese Weise kann die relativ aufwendige (modulare) Potenzberechnung doppelt genutzt werden.

In manchen Ausgestaltungen ist der probabilistische Primzahltest des zweiten Wertes eine Testrunde eines Miller-Rabin-Tests. In einer solchen Testrunde wird eine Zufallszahl verwendet, die beispielsweise durch den ersten Wert oder einen davon abgeleiteten Wert gebildet werden kann. Wenn der zweite Wert eine Primzahl ist, so wird in manchen Ausführungsformen das modulare Inverse des ersten Wertes unter Verwendung des kleinen Fermat'schen Satzes berechnet.

In manchen Ausgestaltungen werden zumindest bei der Potenzberechnung - und gegebenenfalls auch bei weiteren Verfahrensschritten - Montgomery-Multiplikationen ausgeführt. Solche Ausgestaltungen sind dann besonders vorteilhaft, wenn sie auf einem Datenträger mit einem Koprozessor ausgeführt werden, der Montgomery-Operationen unterstützt.

In unterschiedlichen Ausgestaltungen werden mindestens eine Montgomery-Transformation und/ oder mindestens eine Montgomery-Rücktransformation ausgeführt. Vorzugsweise wird die Anzahl dieser Hin- und/ oder Rücktransformationen möglichst gering gehalten. In manchen Ausführungsformen kann vorgesehen sein, das Ergebnis der Potenzberechnung einer Montgomery-Rücktransformation zu unterziehen, deren Ergebnis dann sowohl für die Bestimmung des modularen Inversen als auch für den probabilistischen Primzahltest herangezogen wird. Besonders effizient ist das Verfahren, wenn die gerade genannte Montgomery-Rücktransformation die einzige im Verfahren verwendete Hin- oder Rücktransformation ist.

Die Aufzählungsreihenfolge der Schritte in den Verfahrensansprüchen soll nicht als Einschränkung des Schutzbereichs verstanden werden. Es sind vielmehr auch Ausgestaltungen der Erfindung vorgesehen, in denen diese Schritte ganz oder teilweise in anderer Reihenfolge und/ oder ganz oder teilweise ineinander verschachtelt (*interleaved*) und/oder ganz oder teilweise parallel ausgeführt werden.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, z.B. ein Halbleiterspeicher oder eine Diskette oder eine CD-ROM. Das Computerprogrammprodukt kann jedoch in manchen Ausführungsformen auch ein nicht-körperliches Medium sein, z.B. ein über ein Computernetzwerk übermitteltes Signal. Insbesondere kann das Computerprogrammprodukt Programmbefehle enthalten, die im Zuge der Produktion eines tragbaren Datenträgers in diesen eingebracht werden.

Die erfindungsgemäße Vorrichtung kann insbesondere ein tragbarer Datenträger, z.B. eine Chipkarte oder ein Chipmodul, sein. Ein derartiger Datenträger enthält in an sich bekannter Weise mindestens einen Prozessor, mehrere in unterschiedlichen Technologien ausgestaltete Speicher und diverse Hilfsbaugruppen. In der Wortwahl des vorliegenden Dokuments soll der Begriff "Prozessor" sowohl Hauptprozessoren als auch Koprozessoren umfassen.

In bevorzugten Weiterbildungen weisen das Computerprogrammprodukt und/ oder die Vorrichtung Merkmale auf, die den in der vorliegenden Beschreibung erwähnten und/ oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele und Ausführungsalternativen. Es wird auf die schematische Zeichnung verwiesen.

Fig.1 zeigt ein Flussdiagramm eines Verfahrens zur Bestimmung zweier Primzahlen sowie weiterer Parameter eines RSA-CRT-Schlüssels,

Fig. 2 zeigt ein Flussdiagramm eines Verfahrens zur Bestimmung eines Primzahlkandidaten,

Fig. 3 zeigt eine schematische Darstellung von Komponenten eines tragbaren Datenträgers, der zur Ausführung der Verfahren von Fig. 1 und Fig. 2 geeignet ist,

Fig. 4 zeigt ein Flussdiagramm eines Verfahrens, das eine modulare Inversion und einen Primzahltest kombiniert,

Fig. 5 zeigt eine erste Abwandlung des Verfahrens von Fig. 4, bei der Montgomery-Multiplikationen verwendet werden, und

Fig. 6 zeigt eine zweite Abwandlung des Verfahrens von Fig. 4, bei der Montgomery-Multiplikationen und weniger Hin- und Rücktransformationen als bei dem Verfahren von Fig. 5 verwendet werden.

Im vorliegenden Dokument wird die Erfindung insbesondere in Zusammenhang mit der Bestimmung eines, mehrerer oder aller Parameter eines RSA-CRT-Schlüsselpaars beschrieben. Die Erfindung ist jedoch auch für andere Anwendungszwecke einsetzbar, bei denen relativ große und zufällige Primzahlen und/ oder ein modulares Inverses bezüglich einer Primzahl bestimmt werden müssen.

Allgemein sind die Parameter eines RSA-CRT-Schlüsselpaars von zwei geheimen Primzahlen $p$ und $q$ sowie einem öffentlichen Exponenten $e$ abgeleitet. Hierbei ist der öffentliche Exponent $e$ eine zum Wert $(p\text{-}1)\cdot(q\text{-}1)$ teilerfremde Zahl, die zufällig gewählt oder fest vorgegeben sein kann. Beispielsweise wird in manchen Ausführungsbeispielen die vierte Fermat'sche Primzahl $F_4 = 2^{16} + 1$ als öffentlicher Exponent $e$ verwendet. Der öffentliche Schlüssel enthält den öffentlichen Exponenten $e$ und einen öffentlichen Modul $N := p\cdot q$. Der private RSA-CRT-Schlüssel enthält neben den beiden Primzahlen $p$ und $q$ das modulare Inverse $p_{inv} := p^{-1} \bmod q$ sowie die beiden CRT-Exponenten $d_p$ und $d_q$, die durch $dp := e^{-1} \bmod (p\text{-}1)$ beziehungsweise $d_q := e^{-1} \bmod (q\text{-}1)$ definiert sind.

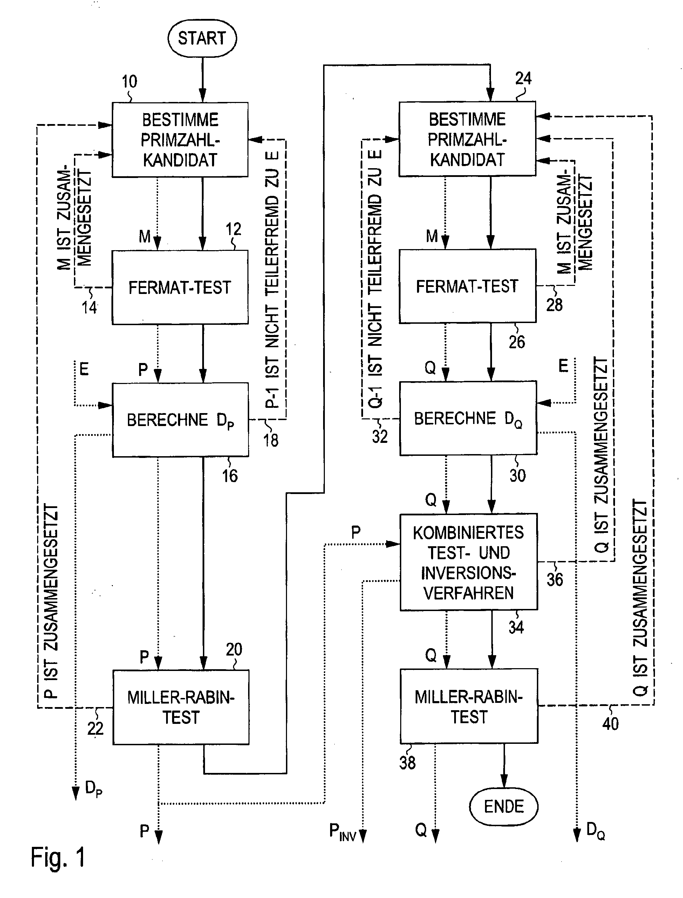

Das Verfahren gemäß Fig. 1 zeigt die Berechnung aller Parameter eines geheimen RSA-CRT-Schlüssels bei vorgegebenem öffentlichen Exponenten $e$.

Das Verfahren besteht aus zwei Teilen, die in einer linken bzw. rechten Spalte von Fig. 1 dargestellt sind. Der erste Teil (Schritte 10,12,16 und 20) umfasst die Bestimmung der einen Primzahl $p$ und des damit zusammenhängenden Schlüsselparameters $d_p$, während der zweite Teil (Schritte 24, 26, 30, 34 und 38) die Bestimmung der anderen Primzahl $q$ und der Schlüsselparameter $d_q$ und $p_{inv}$ betrifft.

Es versteht sich, dass das Verfahren in Ausführungsalternativen derart abgewandelt werden kann, dass nur manche der gerade genannten Parameter berechnet werden. Hierzu können beispielsweise Verfahrensschritte weggelassen oder verkürzt werden, wenn manche Schlüsselparameter anderweitig berechnet oder gar nicht benötigt werden. Insbesondere kann vorgesehen sein, nur einen der beiden in Fig. 1 gezeigten Verfahrensteile (also entweder nur die Schritte 10, 12, 16 und 20 oder nur die Schritte 24, 26, 30, 34 und 38) auszuführen, wenn nur eine einzige Primzahl bestimmt zu werden braucht.

In Fig. 1 und den weiteren Zeichnungsfiguren zeigen die durchgezogenen Pfeile den regulären Programmfluss, und die gestrichelten Pfeile zeigen alternative Programmabläufe, die unter gewissen Bedingungen - insbesondere, wenn sich ein Primzahlkandidat oder eine voraussichtliche Primzahl als zusammengesetzt erweisen - ausgeführt werden. Die gepunkteten Pfeile veranschaulichen den Datenfluss.

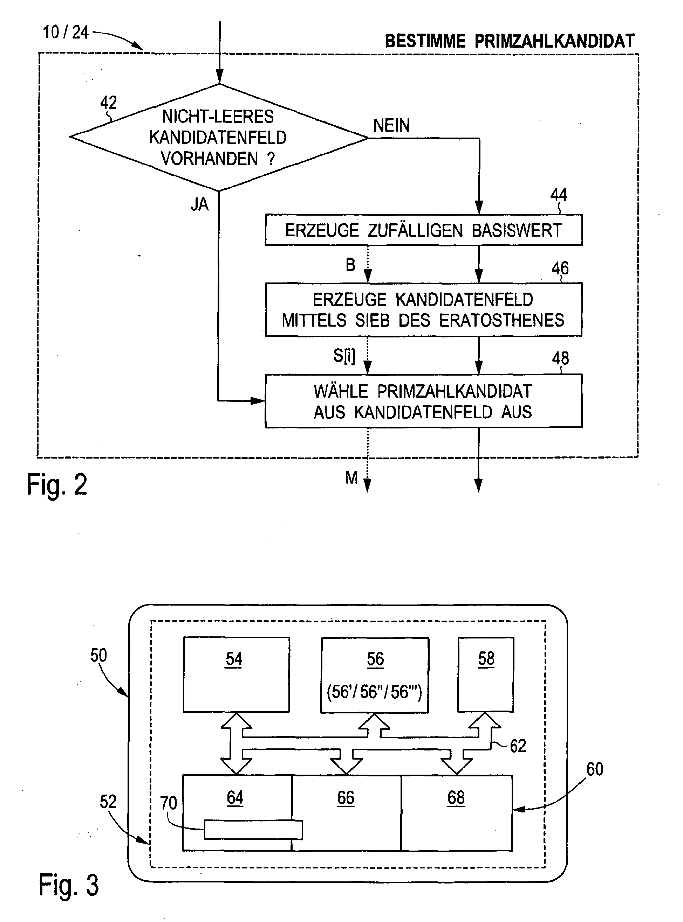

Der in Fig. 1 dargestellte Ablauf beginnt in Schritt 10 mit der Erzeugung eines ersten Primzahlkandidaten $m$, der gewisse Randbedingungen (insbesondere die Randbedingung $m \equiv 3 \bmod 4$) erfüllt. In den hier beschriebenen Ausführungsbeispielen wird bei der Bestimmung jedes Primzahlkandidaten $m$ eine Vorauswahl getroffen, die sicherstellt, dass der Primzahlkandidat $m$ nicht schon durch eine kleine Primzahl (z.B. 2, 3, 5, 7, ...) teilbar ist. Ein geeignetes Bestimmungsverfahren mit Vorauswahl ist in Fig. 2 gezeigt und wird unten genauer beschrieben.

In Schritt 12 wird der Primzahlkandidat $m$ einem Fermat-Test unterzogen. Der Fermat-Test ist ein probabilistischer Primzahltest, der eine zusammengesetzte Zahl mit hoher Wahrscheinlichkeit als solche erkennt, während eine Primzahl nie fälschlich als zusammengesetzte Zahl angesehen wird. Der Fermat-Test beruht auf dem kleinen Fermat'schen Satz, der besagt, dass für jede Primzahl $p$ und jede natürliche Zahl $a$ die Beziehung $a^p \equiv a \bmod p$ gilt. Die Umkehrung gilt nicht notwendigerweise, aber Gegenbeispiele sind so selten, dass ein Primzahlkandidat $m$, der den Fermat-Test besteht, mit an Sicherheit grenzender Wahrscheinlichkeit eine Primzahl ist.

Falls der Primzahlkandidat $m$ bei dem Fermat-Test in Schritt 12 als zusammengesetzte Zahl erkannt wird, erfolgt ein Rücksprung 14 nach Schritt 10, in dem ein neuer Primzahlkandidat bestimmt wird. Andernfalls wird das Verfahren fortgesetzt, wobei der Primzahlkandidat $m$ als voraussichtliche Primzahl $p$ angesehen wird.

In Schritt 16 wird der CRT-Exponent $d_p$, der vermöge $d_p := e^{-1} \bmod (p-1)$ definiert ist, berechnet. Hierfür wird ein an sich bekanntes Inversionsverfahren verwendet. Der CRT-Exponent $d_p$ als modulares Inverses des öffentlichen Exponenten $e$ existiert genau dann, wenn $e$ und $p-1$ teilerfremd sind, also wenn $\mathrm{ggT}(p-1, e) = 1$ gilt. Ist dies nicht der Fall, so erfolgt ein Rücksprung 18 zum Anfang des Verfahrens. Sonst wird der CRT-Exponent $dp$ in Schritt 16 bestimmt und das Verfahren dann in Schritt 20 mit einem Miller-Rabin-Test der voraussichtlichen Primzahl $p$ fortgesetzt.

Der Miller-Rabin-Test ist also solcher aus dem Artikel "Probabilistic algorithms for testing primality" von Michael O. Rabin, erschienen im Journal of Number Theory 12, 1980, Seiten 128-138, bekannt. Bei jeder Testrunde des Miller-Rabin-Tests wird eine zusammengesetzte Zahl mit gewisser Wahrscheinlichkeit als solche erkannt, während eine Primzahl nie fälschlich als zusammengesetzte Zahl angesehen wird. Die Fehlerwahrscheinlichkeit des Miller-Rabin-Tests hängt von der Anzahl der Testrunden ab und kann, indem hinreichend viele Testrunden ausgeführt werden, beliebig klein gehalten werden.

Wegen der bereits erwähnten hohen Treffsicherheit des Fermat-Tests in Schritt 12 ist die Wahrscheinlichkeit, dass die voraussichtliche Primzahl $p$ bei dem Miller-Rabin-Test in Schritt 20 als zusammengesetzte Zahl erkannt wird, vernachlässigbar. Die Wahrscheinlichkeit, dass die Berechnung des CRT-Exponenten $d_p$ in Schritt 16 wegen $\mathrm{ggT}(p-1, e) \neq 1$ fehlschlägt und der Rücksprung 18 ausgeführt werden muss, ist dagegen um Größenordnungen höher. Es ist daher effizienter, den Schritt 16 vor Schritt 20 auszuführen, weil dadurch unnötige Miller-Rabin-Tests vermieden werden. Dennoch umfasst die Erfindung auch Ausführungsbeispiele, bei denen der CRT-Exponent $d_p$ erst nach dem Miller-Rabin-Test oder zu einem anderen Zeitpunkt berechnet wird. Ferner kann in Ausführungsalternativen vorgesehen sein, die Berechnung des CRT-Exponenten $d_p$ getrennt von dem hier beschriebenen Verfahren zur Primzahlermittlung auszuführen; der Schritt 16 kann dann weggelassen werden.

Der Miller-Rabin-Test in Schritt 20 wird ausgeführt, um eine gewünschte maximale Fehlerwahrscheinlichkeit, die beispielsweise $2^{-100}$ betragen kann, mathematisch nachweisen zu können. Bei dem Miller-Rabin-Test werden mehrere Testrunden ausgeführt, deren Anzahl von dieser Fehlerwahrscheinlichkeit abhängt. Eine Testrunde für die voraussichtliche Primzahl $p$ besteht darin, dass eine Zufallszahl zur $((p-1)/2)$-ten Potenz modulo $p$ erhoben wird, und dass geprüft wird, ob das Ergebnis $\pm 1$ modulo $p$ ist. Hierbei wird die Randbedingung $p \equiv 3 \bmod 4$ vorausgesetzt.

In dem höchst unwahrscheinlichen Fall, dass die voraussichtliche Primzahl $p$ bei einer der Testrunden des Miller-Rabin-Tests in Schritt 20 als zusammengesetzte Zahl erkannt wird, erfolgt ein Rücksprung 22 zum Anfang des Verfahrens. Andernfalls wird die Primzahl $p$ als eines der Ergebnisse des hier beschriebenen Verfahrens ausgegeben.

Der zweite Verfahrensteil, der in der rechten Spalte von Fig. 1 gezeigt ist, ist bis auf Schritt 34 eine Wiederholung des ersten Verfahrensteils gemäß der linken Spalte von Fig. 1, wobei die zweite Primzahl $q$ berechnet wird. Es wird daher weitgehend auf die obigen Erläuterungen verwiesen.

Die Schritte 24, 26 und 30 sind analog zu den Schritten 10, 12 und 16. Wenn sich der in Schritt 24 ausgewählte Primzahlkandidat $m$ bei dem Fermat-Test in Schritt 26 als zusammengesetzt erweist, wird ein Rücksprung 28 zur Auswahl eines neuen Primzahlkandidaten in Schritt 24 ausgeführt. Andernfalls wird in Schritt 30 der CRT-Exponent $d_q := e^{-1} \bmod (q-1)$ berechnet. Ein Rücksprung 32 zu Schritt 24 erfolgt, falls $e$ und $q$-1 nicht teilerfremd sind. Andernfalls wird das Verfahren mit der voraussichtlichen Primzahl $q$ fortgesetzt. Ähnlich wie im ersten Verfahrensteil sind auch hier Abwandlungen vorgesehen, bei denen der CRT-Exponent $d_q$ zu einem anderen Zeitpunkt im Zusammenhang mit dem hier beschriebenen Verfahren oder getrennt davon berechnet wird.

In Schritt 34 wird ein kombiniertes Test- und Inversionsverfahren ausgeführt, bei dem eine erste Testrunde eines Miller-Rabin-Tests für die voraussichtliche Primzahl $q$ mit der Berechnung des Inversen $p_{inv} := p^{-1}$ mod $q$ gekoppelt ist. Weil $q$ eine Primzahl ist, kann das Inverse $p_{inv}$ vermöge des kleinen Fermat'schen Satzes als $p_{inv} = p^{-1} = p^{q-2}$ mod $q$ bestimmt werden. Weil $p$ eine Zufallszahl ist, kann bei dieser Berechnung mit geringem Mehraufwand sogleich eine erste Miller-Rabin-Testrunde für die voraussichtliche Primzahl $q$ ausgeführt werden, wobei geprüft wird, ob die (($q$-1)/2)-te Potenz von $p$ modulo $q$ gleich $\pm 1$ ist. Dieser kombinierte Verfahrensschritt 34 wird unten noch im Detail beschrieben.

In Schritt 34 erfolgt ein Rücksprung 36 zu Schritt 24, falls die voraussichtliche Primzahl $q$ die erste Miller-Rabin-Testrunde nicht besteht. Andernfalls werden in Schritt 38 die weiteren noch erforderlichen Testrunden des Miller-Rabin-Tests ausgeführt. Schlägt eine dieser Testrunden fehl, so erfolgt ein Rücksprung 40 nach Schritt 24 zur Auswahl eines neuen Primzahlkandidaten. Andernfalls steht die zweite Primzahl $q$ fest, und das Verfahren endet.

Fig. 2 veranschaulicht die Bestimmung eines Primzahlkandidaten $m$, wie sie in den Schritten 10 und 24 von Fig. 1 ausgeführt wird. In den vorliegend beschriebenen Ausführungsbeispielen wird hierbei ein Kandidatenfeld verwendet, das mehrere Primzahlkandidaten $m$ bereitstellt. Das Kandidatenfeld kann beispielsweise ein gepacktes Bitfeld (*bit array*) $S$ sein, dessen Bits S[i] angeben, ob eine Zahl, die einen von der Bitposition $i$ abhängigen Versatz von einem Basiswert $b$ aufweist, ein Primzahlkandidat $m$ ist oder nicht.

Bei dem Verfahren gemäß Fig. 2 wird zunächst in Test 42 überprüft, ob ein geeignetes und nicht-leeres Kandidatenfeld vorhanden ist. Wenn dies nicht der Fall ist, wird in Schritt 44 ein zufälliger Basiswert $b$ erzeugt, der die Bedingungen $b \equiv 2$ mod 3 und $b \equiv 3$ mod 4 und $b \equiv 2, 3, 4$ mod 5 erfüllt. Diese Randbedingungen verringern die Wahrscheinlichkeit, dass die CRT-Exponenten $d_p$ und $d_q$ bei einem ungünstigen öffentlichen Exponenten $e$ nicht existieren.

In Schritt 46 wird dann das Kandidatenfeld erzeugt. Als Datenstruktur für das Kandidatenfeld wird im vorliegenden Ausführungsbeispiel ein Bitfeld $S$ verwendet, dessen Bitpositionen $i$ jeweils einem Versatz von 60i zum Basiswert $b$ entsprechen. Jedes Bit S[i] des fertiggestellten Kandidatenfeldes zeigt somit an, ob die Zahl $b$+60i als Primzahlkandidat $m$ verwendet werden kann oder nicht. Wegen der oben genanten Randbedingungen für den Basiswert $b$ und der gewählten Schrittweite 60 entspricht jede Bitposition $i$ des Kandidatenfeldes einer Zahl, die nicht durch 2, 3 und 5 teilbar ist.

Zur Erzeugung des Kandidatenfeldes in Schritt 46 werden zunächst alle Bits S[i] auf einen ersten Wert - z.B. den Wert "1" - initialisiert. Dann werden nach dem Prinzip des Siebes des Eratosthenes diejenigen Bits S[i] auf einen zweiten Wert - z.B. den Wert "0" - geändert, die einer durch eine kleine Primzahl teilbaren Zahl $b$+60i entsprechen. Die Größe des Kandidatenfeldes und die Anzahl der Siebdurchläufe werden - in Abhängigkeit von dem verfügbaren Speicherplatz - so gewählt, dass die durchschnittliche Laufzeit des Gesamtverfahrens minimiert wird. Dies ist eine Optimierungsaufgabe, deren Lösung von dem relativen Aufwand für die Vorauswahl verglichen mit dem Aufwand für einen fehlgeschlagenen Fermat-Test abhängt. Für RSA-Schlüssel mit 2048 Bit können beispielsweise mehrere Tausend Siebdurchläufe ausgeführt werden, wobei dann ungefähr 40 Fermat-Tests zur Bestimmung einer der Primzahlen $p$ und $q$ erforderlich sind.

In Schritt 48 wird schließlich ein Primzahlkandidat $m$ aus dem gefüllten Kandidatenfeld ausgewählt. Diese Auswahl kann beispielsweise zufällig oder nach einer vorgegebenen Reihenfolge erfolgen. Bei weiteren Aufrufen des in Fig. 2 gezeigten Verfahrens wird Schritt 48 unmittelbar nach dem Test 42 ausgeführt, und es werden so lange weitere Primzahlkandidaten $m$ aus dem einmal angelegten Kandidatenfeld ausgewählt, bis das Feld leer ist oder eine vorgegebene Mindestfüllmenge unterschritten wird.

Das in Fig. 1 und Fig. 2 gezeigte Verfahren wird in manchen Ausführungsformen von mindestens einem Prozessor eines tragbaren Datenträgers ausgeführt. Fig. 3 zeigt einen solchen Datenträger 50, der beispielsweise als Chipkarte oder Chipmodul ausgestaltet ist. Der Datenträger 50 weist einen Mikrocontroller 52 auf, in dem in an sich bekannter Weise ein Hauptprozessor 54, ein Koprozessor 56, eine Kommunikationsschnittstelle 58 und eine Speicherbaugruppe 60 auf einem einzigen Halbleiterchip integriert und über einen Bus 62 miteinander verbunden sind.

Die Speicherbaugruppe 60 weist mehrere in unterschiedlichen Technologien ausgestaltete Speicherfelder auf, die beispielsweise einen Festwertspeicher 64 (maskenprogrammiertes ROM), einen nicht-flüchtigen überschreibbaren Speicher 66 (EEPROM oder Flash-Speicher) und einen Arbeitsspeicher 68 (RAM) umfassen. Die hier beschriebenen Verfahren sind in Form von Programmbefehlen 70 implementiert, die im Festwertspeicher 64 und zum Teil auch im nicht-flüchtigen überschreibbaren Speicher 66 enthalten sind.

Der Koprozessor 56 des Datenträgers 50 ist zur effizienten Ausführung diverser kryptographischer Operationen, insbesondere einer modularen Multiplikation, ausgelegt. Insbesondere ist für die hier beschriebenen Ausführungsbeispiele relevant, dass der Koprozessor 56 die Montgomery-Multiplikation mit Bitlängen, wie sie für kryptographische Anwendungen benötigt werden, unterstützt. In manchen Ausgestaltungen unterstützt der Koprozessor 56 keine "normale" modulare Multiplikation, so dass derartige Multiplikationen mit erheblich höherem Aufwand durch den Hauptprozessor 54 ausgeführt werden müssen.

Für natürliche Zahlen $x$, $y$ und eine ungerade natürliche Zahl $m$ mit $x$, $y < m$ sowie eine Zweierpotenz $R$ mit $R > m$ ist das Montgomery-Produkt von $x$ und $y$ modulo $m$ bezüglich $R$ allgemein wie folgt definiert:

$$x *_{m,R} y \; := \; x \cdot y \cdot R^{-1} \bmod m$$

Allgemein wird im vorliegenden Dokument bei der Angabe einer Modulo-Beziehung der Form "$a = z \bmod m$" das Gleichheitszeichen "=" bzw. das Definitionszeichen ":=" verwendet, um auszudrücken, dass $a$ das eindeutig definierte Element aus $(z + Z) \cap [0, ..., m[$ ist, für das die Modulo-Beziehung gilt. Die Schreibweise "$a \equiv z \bmod m$" drückt dagegen lediglich aus, dass die Äquivalenz modulo $m$ gilt.

Wenn sich der Montgomery-Parameter $R$ aus dem Kontext ergibt, wird im vorliegenden Dokument oft auch die abgekürzte Schreibweise $x *_m y$ statt der ausführlichen Schreibweise $x *_{m,R} y$ für das Montgomery-Produkt verwendet.

Obwohl die oben definierte Montgomery-Multiplikation eine modulare Operation ist, kann sie ohne Division implementiert werden, wie dies an sich gut bekannt und z.B. in dem eingangs genannten Artikel "*Modular multiplication without trial division*" beschrieben ist. Für eine Montgomery-Multiplikation werden zwei nicht-modulare Multiplikationen, ein vorab in Abhängigkeit von $m$ und $R$ berechneter Hilfswert, einige Additionen und eine abschließende bedingte Subtraktion von $m$ benötigt. Diese Berechnungen können durch den Koprozessor 56 effizient ausgeführt werden.

Bei gegenwärtig kommerziell verfügbaren Mikrocontrollern 52 sind Ausgestaltungen von Koprozessoren 56', 56", 56''' bekannt, die nicht genau die oben definierte Montgomery-Multiplikation, sondern Abwandlungen davon ausführen. Der Grund für diese Abwandlungen liegt primär darin, dass die Entscheidung, ob die abschließende bedingte Subtraktion der Montgomery-Multiplikation ausgeführt werden soll, auf unterschiedliche Weisen optimiert werden kann. Allgemein liefern die abgewandelten Koprozessoren 56', 56", 56''' bei der Berechnung der Montgomery-Multiplikation ein Ergebnis, das sich von dem oben definierten Ergebnis potenziell um ein kleines Vielfaches des Moduls $m$ unterscheidet. Ferner ist der zulässige Wertebereich für die Faktoren $x$ und $y$ bei den abgewandelten Koprozessoren 56', 56", 56''' derart erweitert, dass ein berechnetes Ergebnis stets wieder einen zulässigen Eingabewert als Faktor der Montgomery-Multiplikation darstellt.

Genauer berechnet ein erster abgewandelter Koprozessor 56' ein erstes abgewandeltes Montgomery-Produkt $x *'_m y$, das wie folgt definiert ist:

$$x *'_m y \; := \; (x \cdot y \cdot R^{-1} \bmod m) + k \cdot m$$

Hierbei beträgt $R = 2^n$ für bestimmte Registergrößen $n$, die Vielfache von 16 sind. Der Wertebereich für die Faktoren $x$ und $y$ ist auf $[0, ..., R\text{-}1]$ erweitert, und $k$ ist eine natürliche Zahl, die so klein ist, so dass $x *'_m y < R$ gilt.

Ein zweiter abgewandelter Koprozessor 56" berechnet dagegen ein zweites abgewandeltes Montgomery-Produkt $x *''_m y$, das wie folgt definiert ist:

$$x *''_m y \; := \; (x \cdot y \cdot 2^{-n'} \bmod m) - \varepsilon \cdot m$$

Die Faktoren $x$ und $y$ sind hierbei ganze Zahlen im Bereich $-m \le x$, $y < m$. Ferner gilt $\varepsilon \in \{0,1\}$, und der Exponent $n'$ hat den Wert $n' = n + 16p$ für eine Präzision $p = 1$, 2 oder 4, eine Blockgröße $c$ mit $160 \le c \le 512$, die ein Mehrfaches von 32 ist, und eine Registergröße $n = c \cdot p$. Für den Modul $m$ gilt $m < 2^n$, und der Wert $R$ ist als $R := 2^{n'}$ definiert.

Ein dritter abgewandelter Koprozessor 56''' berechnet schließlich ein drittes abgewandeltes Montgomery-Produkt $x *'''_m y$, das wie folgt definiert ist:

$$x *'''_m y \; := \; (x \cdot y \cdot 2^{-t \cdot c} \bmod m) + \varepsilon \cdot m$$

Die Faktoren $x$ und $y$ sind hierbei natürliche Zahlen mit $x < 2^{t \cdot c}$ und $y < 2 \cdot m$. Ferner gilt $\varepsilon \in \{0,1\}$. Die Blockgröße $c$ ist fest und beträgt $c = 128$. Die Registergröße für den Faktor $x$ beträgt $t \cdot c$. Die Registergröße für die anderen Variablen wird mit $n$ bezeichnet und beträgt ein Vielfaches der Blockgröße $c$. Wenn $n = t \cdot c$ gilt, dann braucht der Faktor $x$ statt der Bedingung $x < 2^{t \cdot c}$ lediglich der Bedingung $x < \max\{2 \cdot m, 2^n\}$ zu genügen.

Im vorliegenden Dokument wird das Montgomery-Produkt zweier Faktoren $x$ und $y$ bezüglich des Moduls $m$ allgemein durch $x *_m y$ bezeichnet, wenn es keine Rolle spielt oder aus dem Kontext hervorgeht, ob es sich um genau das Montgomery-Produkt $x *_m y$ des Koprozessors 56 gemäß der ursprünglich gegebenen Definition oder eines der drei abgewandelten Montgomery-Produkte $x *'_m y$ bzw. $x *''_m y$ bzw. $x *'''_m y$ eines der Koprozessoren 56', 56", 56''' handelt.

Generell kann jede "normale" modulare Multiplikation $x \cdot y = z \bmod m$ durch eine Montgomery-Multiplikation $x' *_m y' = z'$ ersetzt werden, wenn die Eingangswerte $x$, $y$ zunächst mittels je einer Montgomery-Transformation in ihre entsprechenden Montgomery-Repräsentationen $x'$, $y'$ umgewandelt werden und dann der Ergebniswert von seiner Montgomery-Repräsentation $x'$

zum Wert $x$ zurücktransformiert wird. Die Montgomery-Transformation kann beispielsweise durch die Berechnung $x' := x \cdot R$ mod $m$ erfolgen. Bei der Rücktransformation kann das Ergebnis $z := z' \cdot R^{-1}$ mod $m$ effizient durch eine Montgomery-Multiplikation mit dem Faktor 1, also durch die Berechnung $z := z' *_m 1$, bestimmt werden.

Wegen der erforderlichen Hin- und Rücktransformationen ist es in der Regel nicht effizient, eine einzige modulare Multiplikation durch eine Montgomery-Multiplikation zu ersetzen. Wenn aber mehrere Multiplikationen nacheinander ausgeführt werden sollen - wie dies beispielsweise bei einer modularen Potenzierung der Fall ist -, dann können diese Multiplikationen vollständig im Montgomery-Zahlenraum durchgeführt werden. Es ist dann nur eine einzige Hintransformation am Anfang der Berechnungssequenz und eine einzige Rücktransformation am Ende der Berechnungssequenz erforderlich.

Nach dem gerade beschriebenen Prinzip können bei dem in Fig. 1 und Fig. 2 gezeigten Verfahren einige oder alle modulare Multiplikationen als Montgomery-Multiplikationen implementiert werden. Es versteht sich, dass hierbei Berechnungsabschnitte, die im Montgomery-Zahlenraum erfolgen, möglichst zusammengefasst werden sollten, um die Anzahl der erforderlichen Hin- und Rücktransformationen zu reduzieren. Additionen und Subtraktionen können ohne Unterschied im "normalen" Zahlenraum und im Montgomery-Zahlenraum ausgeführt werden.

Die Verwendung von Montgomery-Multiplikationen ist besonders vorteilhaft, wenn der Datenträger 50 einen Koprozessor 56, 56', 56", 56"' aufweist, der zwar die Montgomery-Multiplikation, nicht aber die normale modulare Multiplikation unterstützt. Auch wenn der Koprozessor 56, 56', 56", 56"' beide Multiplikationsarten unterstützt, wird die Montgomery-Multiplikation häufig effizienter ausgeführt. Je nach der Anzahl der erforderlichen Transformationen - insbesondere der im Vergleich zu den Rücktransformationen aufwendigeren Hintransformationen - ergibt sich eine erhebliche Ersparnis sogar dann, wenn eine Montgomery-Multiplikation nur geringfügig effizienter als eine normale modulare Multiplikation ausgeführt werden sollte.

Bei der Verwendung von Montgomery-Multiplikationen in dem Verfahren von Fig. 1 und Fig. 2 sind diverse Optimierungen möglich. So wird beispielsweise bei den Miller-Rabin-Tests in den Schritten 20 und 38 eine Zufallszahl $r$ zu einer von der voraussichtlichen Primzahl $p$ bzw. $q$ abhängigen Potenz erhoben. Wenn die Potenzierung mittels Montgomery-Multiplikationen erfolgt, dann macht es offensichtlich keinen Unterschied, ob eine Zufallszahl $r$ oder deren Montgomery-Repräsentation potenziert wird. Es ist daher vor der Potenzierung keine Montgomery-Transformation der Zufallszahl $r$ erforderlich. Das Ergebnis der Potenzierung wird dagegen von seiner Montgomery-Transformation in den normalen Zahlenraum rücktransformiert, bevor überprüft wird, ob dieses Ergebnis modulo der zu testenden Primzahl $\pm 1$ beträgt.

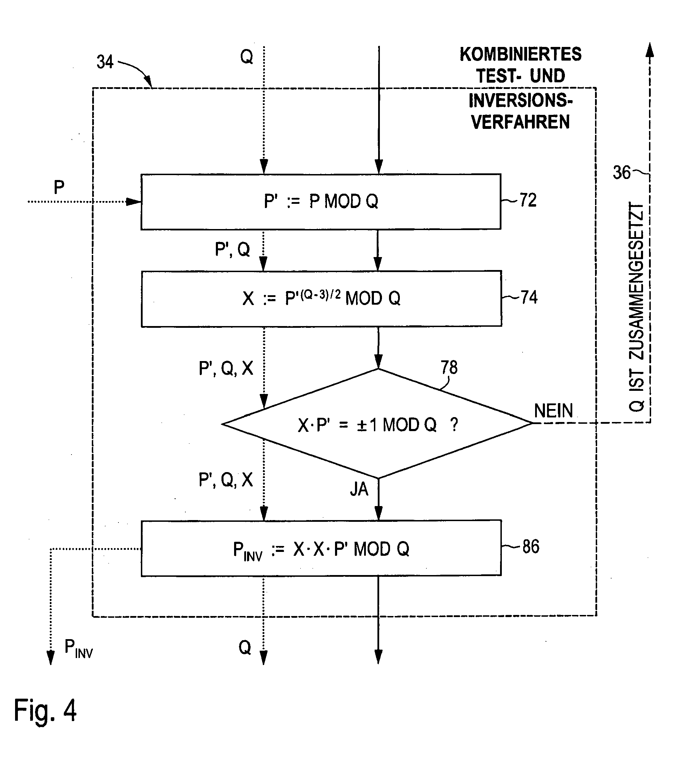

In Fig. 4 ist eine erste Ausgestaltung des kombinierten Test- und Inversionsverfahrens von Schritt 34 (Fig. 1) genauer dargestellt. Bei diesem Verfahren wird die Inversion der ersten Primzahl $p$ mit einer ersten Testrunde des Miller-Rabin-Tests für die zweite Primzahl $q$ gekoppelt. Insbesondere wird das Ergebnis einer Potenzberechnung, deren Basis von der ersten Primzahl $p$ und deren Exponent von der zweiten Primzahl $q$ abhängt, als Zwischenwert sowohl für den Miller-Rabin-Test als auch für die Inversenberechnung verwendet. Dies bedeutet eine erhebliche Einsparung im Vergleich zu zwei unabhängigen Berechnungsvorgängen.

In der in Fig. 4 gezeigten Ausgestaltung des Berechnungsverfahrens 34 wird zunächst in Schritt 72 die erste Primzahl $p$ modular gegenüber $q$ als Modul reduziert; das Ergebnis wird hier mit $p'$ bezeichnet.

Im folgenden Schritt 74 wird ein Zwischenwert $x$ berechnet, der durch $x := p'^{(q-3)/2}$ mod $q$ definiert ist. Diese Potenzierung kann beispielsweise durch das an sich bekannte "Quadriere-und-Multipliziere-Verfahren" (*square-and-multiply method*) ausgeführt werden, bei dem für jedes Bit des Exponenten je eine Quadrierung eines Zwischenergebnisses und - je nach dem Wert dieses Bits - zusätzlich eine Multiplikation des Zwischenergebnisses mit der Basis ausgeführt wird.

Test 78 stellt die erste Miller-Rabin-Testrunde dar. Bei dieser Testrunde wird geprüft, ob der Ausdruck $p'^{(q-1)/2}$ mod $q$ den Wert $\pm 1$ hat. Unter Verwendung des in Schritt 74 berechneten Zwischenergebnisses $x$ kann der gerade genannte Ausdruck zu $x \cdot p'$ mod $q$ vereinfacht werden. Insgesamt wird somit in Test 78 geprüft, ob $x \cdot p' = \pm 1$ mod $q$ gilt. Wenn dies nicht der Fall ist, dann hat die Miller-Rabin-Testrunde die voraussichtliche Primzahl $q$ als zusammengesetzte Zahl erkannt, und der Rücksprung 36 wird ausgeführt.

Wenn die Miller-Rabin-Testrunde bestanden ist ("JA"-Zweig in Test 78), dann wird in Schritt 86 das modulare Inverse $p_{inv}$ der ersten Primzahl $p$ zum Modul $q$ berechnet. Wie oben bereits erwähnt, gilt nach dem kleinen Fermat'schen Satz $p_{inv} = p^{q-2}$ mod $q$, und der Ausdruck $p^{q-2}$ ist modulo $q$ äquivalent zu $x \cdot x \cdot p'$. Insgesamt wird somit in Schritt 86 des hier beschriebenen Ausführungsbeispiels die Berechnung $p_{inv} = x \cdot x \cdot p'$ mod $q$ durchgeführt. Für die Inversenberechnung sind somit im vorliegenden Ausführungsbeispiel lediglich eine modulare Reduktion (Schritt 72) und zwei modulare Multiplikationen (Schritt 86) erforderlich.

Es versteht sich, dass Schritt 86 in Ausführungsalternativen weiter vereinfacht werden kann, wenn in Test 78 der Wert $x \cdot p'$ berechnet und als Zwischenergebnis gespeichert wird. Ferner versteht sich, dass die Schritte 78 und 86 prinzipiell voneinander unabhängig sind, so dass sie in Ausführungsalternativen in beliebiger Reihenfolge oder auch ineinander verzahnt ausgeführt werden können.

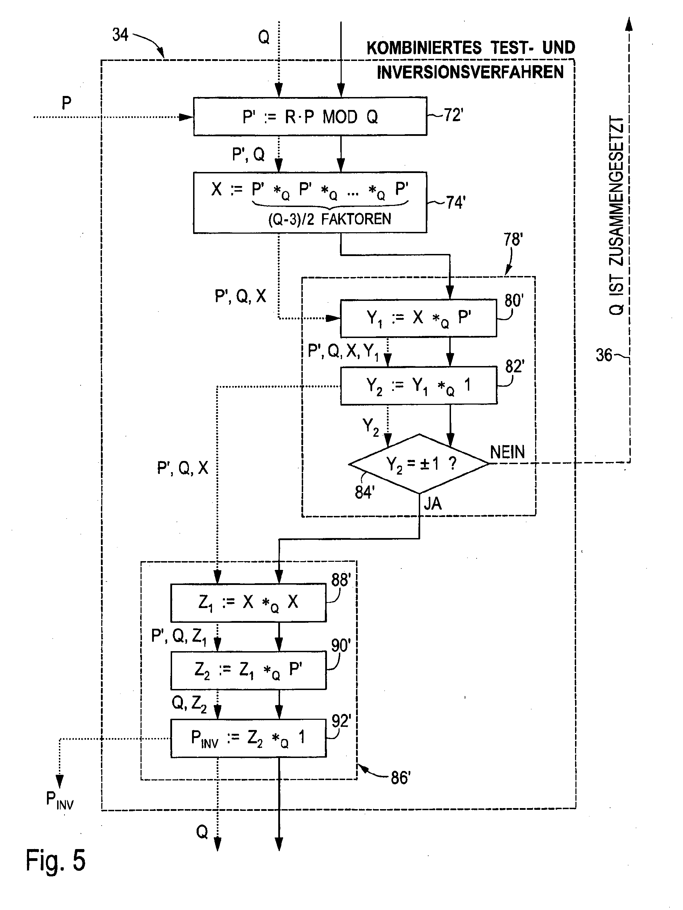

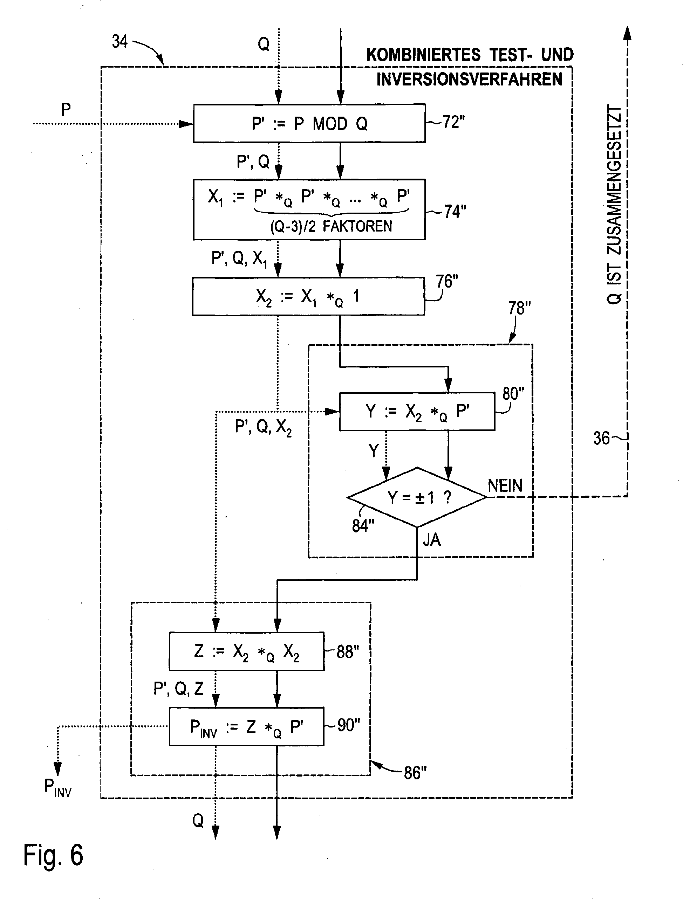

Bei dem in Fig. 4 gezeigten Ausführungsbeispiel wird in den diversen Berechnungsschritten die "normale" modulare Multiplikation verwendet. Je nach der Ausgestaltung des Datenträgers 50 kann diese Multiplikation allein durch den Hauptprozessor 54 oder allein durch den Koprozessor 56 oder durch ein Zusammenwirken von Haupt- und Koprozessor 54, 56 ausgeführt werden. Wie oben bereits beschrieben, ist es jedoch in vielen Ausgestaltungen vorteilhaft, das kombinierte Test- und Inversionsverfahren von Schritt 34 derart abzuwandeln, dass manche oder alle der darin verwendeten Multiplikationen als Mongomery-Multiplikationen ausgeführt werden. Derartige Ausgestaltungen werden im folgenden unter Hinweis auf Fig. 5 und Fig. 6 beschrieben.

Fig. 5 zeigt eine abgewandelte Ausführungsform des kombinierten Test- und Inversionsverfahrens von Schritt 34, bei der fast alle modularen Multiplikationen des Verfahrens von Fig. 4 (bis auf Schritt 72) als Montgomery-Multiplikationen ausgeführt werden. Gemäß dem bereits oben beschriebenen Prinzip für die Verwendung von Montgomery-Multiplikationen sind bei dem Verfahren von Fig. 5 zusätzlich Schritte zur Transformation eines Wertes in die entsprechende Montgomery-Repräsentation sowie zur Rücktransformation in den normalen Zahlenraum vorgesehen.

Das Verfahren beginnt in Schritt 72' mit der Transformation der zufälligen Primzahl $p$ in deren Montgomery-Repräsentation $p'$. Dieser Schritt wird durch eine "normale" modulare Multiplikation gemäß $p' := R \cdot p \bmod q$ ausgeführt und schließt die modulare Reduktion von $p$ (wie in Schritt 72 von Fig. 4) ein.

In Schritt 74' wird der Wert $p'$ unter Verwendung von Montgomery-Multiplikätionen potenziert. Die Berechnung wird (ähnlich wie in Schritt 74 von Fig. 4) unter Verwendung des "Quadriere-und-Multipliziere-Verfahrens" ausgeführt. Das Ergebnis $x$ entspricht genau dem Ergebnis, das durch Montgomery-Multiplikation von $(q-3)/2$ Faktoren $p'$ erzielt werden würde. In Formelschreibweise lautet dieses Ergebnis $x = R \cdot p^{(q-3)/2} \bmod q$.

In Schritt 78' wird (ähnlich wie in Schritt 78 von Fig. 4) die erste Miller-Rabin-Testrunde ausgeführt. Hierzu wird zunächst in Teilschritt 80' der Wert $y_1 := x *_q p'$ mittels einer Montgomery-Multiplikation berechnet. In Teilschritt 82' wird der Wert $y_1$ dann mittels der Montgomery-Multiplikation $y_2 := y_1 *_q 1$ in den normalen Zahlenraum zurücktransformiert. In Test 84' wird schließlich geprüft, ob das Ergebnis $y_2$ den Wert +1 oder -1 hat. Ist dies nicht der Fall, so wird der Rücksprung 36 ausgeführt. Andernfalls wird das Verfahren mit Schritt 86' fortgesetzt, der dem Invertierungsschritt 86 von Fig. 4 entspricht.

In den ersten beiden Teilschritten 88', 90' von Schritt 86' wird mittels der beiden Montgomery-Multiplikationen $z_1 := x *_q x$ und $z_2 := z_1 *_q p'$ die Montgomery-Repräsentation $z_2$ des modularen Inversen von $p$ berechnet. Diese Montgomery-Repräsentation $z_2$ wird dann in Teilschritt 92' in den normalen Zahlenraum zurücktransformiert, um den gewünschten Ergebniswert $p_{inv} := z_2 *_q 1$ zu erhalten, der identisch zu dem Ergebnis $p_{inv}$ von Fig. 4 ist.

In Fig. 5 sind die Schritte 78' und 86' leicht versetzt gezeigt, um anzudeuten, dass diese Schritte voneinander unabhängig sind und sie daher auch in vertauschter Reihenfolge oder ineinander verzahnt ausgeführt werden können.

Das Verfahren von Fig. 5 stellt schon eine beträchtliche Verbesserung des Verfahrens von Fig. 4 dar, weil in vielen Hardwareumgebungen die Potenzierung mittels Montgomery-Multiplikationen in Schritt 74' deutlich effizienter als die Potenzierung mittels normaler modularer Multiplikationen in Schritt 74 ist. Dennoch sind weitere Optimierungen möglich, wie sie beispielhaft in Fig. 6 gezeigt sind.

Das optimierte Verfahren gemäß Fig. 6 geht von der Grundidee aus, den Berechnungsablauf von Fig. 4 möglichst weitgehend beizubehalten, wobei die modularen Multiplikationen durch Montgomery-Multiplikationen ersetzt werden. Überraschenderweise lässt sich dann die Anzahl der Transformationen zwischen dem normalen Zahlenraum und dem Montgomery-Zahlenraum auf ein Mindestmaß, nämlich auf eine einzige Montgomery-Rücktransformation, reduzieren.

Das Verfahren beginnt in Schritt 72" mit einer modularen Reduktion von $p$ bezüglich des Moduls $q$, um den Wert $p'$ zu erhalten. Im Gegensatz zu Schritt 72' von Fig. 5 wird im vorliegenden Verfahren keine Montgomery-Transformation ausgeführt. Dies stellt eine erhebliche Ersparnis dar, weil die Montgomery-Transformation in vielen Ausgestaltungen durch den Hauptprozessor 54 des Datenträgers 50 - ohne Unterstützung durch den Koprozessor 56, 56', 56", 56"' - ausgeführt werden muss. Das Ergebnis $p'$ kann als fiktive Montgomery-Transformation eines Eingangswertes $p \cdot R^{-1}$ angesehen werden. In einigen Ausgestaltungen kann - je nach der verwendeten Hardware und den Eigenschaften der Zahlen $p$ und $q$ - die modulare Reduktion von Schritt 72" immer oder in manchen Fällen weggelassen werden.

In Schritt 74" wird, ähnlich wie in Schritt 74' von Fig. 5, eine Potenzierung des Wertes $p'$ unter Verwendung von Montgomery-Multiplikationen durchgeführt. In praktischen Implementierungen wird hierzu das "Quadriere-und-Multipliziere-Verfahren" verwendet. Das Ergebnis $x_1$ ist identisch mit dem Ergebnis, das sich durch $(q-5)/2$ Montgomery-Multiplikationen von $(q-3)/2$ Faktoren $p'$ ergeben würde. Insgesamt gilt $x_1 = R \cdot (p \cdot R^{-1})^{(q-3)/2} \bmod q$.

In Schritt 76" wird eine Montgomery-Rücktransformation ausgeführt, um das Ergebnis $x_2 := x_1 *_q 1$ zu erhalten. Es gilt $x_2 = (p \cdot R^{-1})^{(q-3)/2} \bmod q$. Diese Rücktransformation ist der einzige Transformationsschritt, den das Verfahren gemäß Fig. 6 zusätzlich zum Verfahren gemäß Fig. 4 aufweist.

In dem folgenden Schritt 78" wird die erste Miller-Rabin-Testrunde ausgeführt. Hierzu wird in Teilschritt 80" der Wert $y := x_2 *_q p'$ berechnet, und in Teilschritt 84" wird überprüft, ob das Ergebnis $y$ den Wert +1 oder -1 hat. Die Korrektheit dieses Tests lässt sich durch die Beobachtungen begründen, dass $y = (p \cdot R^{-1})^{(q-1)/2} \bmod q$ gilt, und dass es keine Rolle spielt, ob die Miller-Rabin-Testrunde mit der Zufallszahl $p$ oder mit deren - ebenfalls zufälligen - Montgomery-Transformation $p \cdot R^{-1}$ ausgeführt wird.

Schritt 86" betrifft schließlich die Berechnung des Inversen $p_{inv}$. Hierbei wird in Teilschritt 88" ein Zwischenwert $z$ durch die Montgomery-Multiplikation $z := x_2 *_q x_2$ berechnet; es gilt $z = R^{-1} \cdot (p \cdot R^{-1})^{(q-3)} \mod q$. Wegen des kleinen Fermat'schen Satzes ist $(p \cdot R^{-1})^{-1} = (p \cdot R^{-1})^{(q-2)} \mod q$, und somit gilt insgesamt $z \cdot p \cdot R^{-1} = p^{-1} \mod q$. Das modulare Inverse $p_{inv}$ kann daher in Teilschritt 90" durch eine Montgomery-Multiplikation gemäß $p_{inv} := z *_q p'$ berechnet werden.

Die Korrektheit der Berechnung des modularen Inversen $p_{inv}$ nach dem Verfahren von Fig. 6 lässt sich durch das folgende Argument veranschaulichen: Durch das Weglassen der anfänglichen Montgomery-Transformation in Schritt 72" fehlt bei der Berechnung zunächst ein Faktor $R$. Dieser Faktor $R$ wird durch die Inversenbildung in einen fehlenden Faktor $R^{-1}$ umgewandelt. Ein weiterer Faktor $R^{-1}$ wäre für die Rücktransformation des Ergebnisses erforderlich. Statt jedoch am Ende des Verfahrens zwei Rücktransformationsschritte auszuführen, reicht eine einzige Rücktransformation aus, die in Schritt 76" vor der Quadrierung in Schritt 88" ausgeführt wird.

Das Verfahren gemäß Fig. 6 kann weiter optimiert werden, wenn es unter Verwendung des oben beschriebenen ersten abgewandelten Koprozessors 56' ausgeführt wird. In diesem Fall kann statt der modularen Reduktion in Schritt 72" eine Montgomery-Multiplikation mit 1 als einem Faktor ausgeführt werden; es wird also Schritt 72" durch eine Berechnung $p' := p *_q 1$, die einer Montgomery-Rücktransformation entspricht, ersetzt. Bei dem ersten abgewandelten Koprozessor 56' ist diese Berechnung zulässig, weil dieser Koprozessor Faktoren verarbeitet, die größer als der Modul sein dürfen. Der Ergebniswert $p'$ dieser Berechnung ist stets kleiner als der Modul $q$.

Die weiteren Schritte 74', 76", 80", 84" und 88" des Verfahrens von Fig. 6 werden in der gerade genannten Optimierung unverändert ausgeführt. Nach Schritt 74" gilt $x_1 = (p \cdot R^{-1})^{(q-3)/2} \mod q$. Somit führt die Montgomery-Rücktransformation in Schritt 72" zu einem Berechnungsfehler, der anfangs einem Faktor $R^{-1}$ und dann - nach der Inversion - einem Faktor $R$ entspricht. Dieser Fehler kann ausgeglichen werden, indem zum Ende der Berechnung eine zusätzliche Montgomery-Rücktransformation ausgeführt wird. Schritt 90" wird somit dadurch abgewandelt, dass nicht nur eine, sondern zwei Montgomery-Multiplikationen ausgeführt werden, um das korrekte Ergebnis $p_{inv} := z *'_q p' *'_q 1$ zu erhalten.

Falls bei dem gerade beschriebenen Berechnungsverfahren für den Koprozessor 56' eine größere Registerbreite für $p$ benötigt wird als für $q$, so brauchen nur die anfängliche und die abschließende Montgomery-Rücktransformation mit dieser größeren Registerbreite ausgeführt zu werden.

Es versteht sich, dass die hier beschriebenen Ausführungsformen und Ausführungsvarianten lediglich als Beispiele zu sehen sind. Weitere Abwandlungen und Kombinationen der hier beschriebenen Merkmale sind für den Fachmann unmittelbar ersichtlich.

**Patentansprüche**

1. Vorrichtung mit mindestens einem Prozessor (54, 56, 56', 56", 56"') und mindestens einem Speicher (60, 64, 66, 68), wobei die Vorrichtung eingerichtet ist zur Bestimmung eines modularen Inversen $p_{inv}$ eines ersten Wertes $p$ bezüglich eines zweiten Wertes $q$ als Modul in Verbindung mit einem probabilistischen Primzahltest des zweiten Wertes $q$, **dadurch gekennzeichnet, dass** die Vorrichtung eingerichtet ist, im Rahmen einer Schlüsselgenerierung eine Potenzberechnung durchzuführen, deren Basis von dem ersten Wert $p$ abhängt und deren Exponent von dem zweiten Wert $q$ abhängt, und das Ergebnis dieser Potenzberechnung oder ein davon abgeleiteter Wert als Zwischenwert sowohl für die Bestimmung des modularen Inversen $p_{inv}$ des ersten Wertes $p$ als auch für den probabilistischen Primzahltest des zweiten Wertes $q$ heranzuziehen.

2. Vorrichtung nach Anspruch 1, **dadurch gekennzeichnet, dass** der probabilistische Primzahltest eine Testrunde eines Miller-Rabin-Tests ist.

3. Vorrichtung nach Anspruch 1 oder Anspruch 2, **dadurch gekennzeichnet, dass** der erste Wert $p$ eine zufällige Primzahl ist, und dass der erste Wert $p$ oder ein davon abhängiger Wert als Zufallszahl in dem probabilistischen Primzahltest verwendet wird.

4. Vorrichtung nach einem der Ansprüche 1 bis 3, **dadurch gekennzeichnet, dass** bei dem probabilistischen Primzahltest eine Multiplikation des Zwischenwertes mit der Basis der Potenzberechnung ausgeführt wird, und dass geprüft wird, ob das Ergebnis dieser Multiplikation ein vorbestimmter Wert oder einer von mehreren vorbestimmten Werten ist.

5. Vorrichtung nach einem der Ansprüche 1 bis 4, **dadurch gekennzeichnet, dass** der zweite Wert $q$ eine Primzahl ist, und dass das modulare Inverse $p_{inv}$ unter Verwendung des kleinen Fermat'schen Satzes als $p_{inv} = p^{q-2} \mod q$ berechnet wird.

6. Vorrichtung nach einem der Ansprüche 1 bis 5, **dadurch gekennzeichnet, dass** bei der Potenzberechnung für einen Wert $p'$, dessen Differenz zu $p$ entweder null oder ein ganzzahliges Vielfaches von $q$ ist, der Wert $p'^{(q-3)/2} \mod q$ berechnet wird.

7. Vorrichtung nach einem der Ansprüche 1 bis 5, **dadurch gekennzeichnet, dass** zumindest bei der Potenzberechnung Montgomery-Multiplikationen ausgeführt werden.

**8.** Vorrichtung nach Anspruch 7, **dadurch gekennzeichnet, dass** vor der Potenzberechnung eine Montgomery-Transformation des ersten Wertes $p$ ausgeführt wird, und dass das Ergebnis der Potenzberechnung oder ein davon abhängiger Wert einer Montgomery-Rücktransformation unterzogen wird.

**9.** Vorrichtung nach Anspruch 7 oder Anspruch 8, **dadurch gekennzeichnet, dass** das Ergebnis der Potenzberechnung einer Montgomery-Rücktransformation unterzogen wird, deren Ergebnis sowohl für die Bestimmung des modularen Inversen $p_{inv}$ des ersten Wertes $p$ als auch für den probabilistischen Primzahltest des zweiten Wertes $q$ herangezogen wird.

**10.** Vorrichtung nach einem der Ansprüche 7 bis 9, **dadurch gekennzeichnet, dass** bei der Potenzberechnung einer der Werte $p^{(q-3)/2}$ mod $q$ oder $R \cdot p^{(q-3)/2}$ mod $q$ oder $R \cdot (p \cdot R^{-1})^{(q-3)/2}$ mod $q$ oder $(p \cdot R^{-1})^{(q-3)/2}$ mod $q$ berechnet wird, wobei $R$ ein Parameter der bei der Potenzberechnung ausgeführten Montgomery-Multiplikationen ist.

**11.** Vorrichtung nach einem der Ansprüche 1 bis 10, **dadurch gekennzeichnet, dass** die Potenzberechnung modulo des zweiten Wertes $q$ oder modulo eines von dem zweiten Wert $q$ abhängigen Wertes ausgeführt wird.

**12.** Vorrichtung nach einem der Ansprüche 1 bis 11 in der Form eines tragbaren Datenträgers.

**13.** Verfahren zur Bestimmung eines modularen Inversen $p_{inv}$ eines ersten Wertes $p$ bezüglich eines zweiten Wertes $q$ als Modul in Verbindung mit einem probabilistischen Primzahltest des zweiten Wertes $q$, wobei das Verfahren auf einem Prozessor im Rahmen einer Schlüsselgenerierung ausgeführt wird, **dadurch gekennzeichnet, dass** eine Potenzberechnung durchgeführt wird, deren Basis von dem ersten Wert $p$ abhängt und deren Exponent von dem zweiten Wert $q$ abhängt, und dass das Ergebnis dieser Potenzberechnung oder ein davon abgeleiteter Wert als Zwischenwert sowohl für die Bestimmung des modularen Inversen $p_{inv}$ des ersten Wertes $p$ als auch für den probabilistischen Primzahltest des zweiten Wertes $q$ herangezogen wird.

**14.** Verfahren nach Anspruch 13, **dadurch gekennzeichnet, dass** das Verfahren zur Bestimmung mindestens eines Parameters eines RSA-CRT-Schlüssels dient.

**15.** Auf einem Speichermedium gespeichertes Computerprogrammprodukt mit einer Vielzahl von Programmbefehlen, die mindestens einen Prozessor (54, 56, 56', 56'', 56''') dazu veranlassen, ein Verfahren nach einem der Ansprüche 13 oder 14 auszuführen.

**Claims**

**1.** An apparatus having at least one processor (54, 56, 56', 56'', 56''') and at least one memory (60, 64, 66, 68), wherein the apparatus is adapted to determine a modular inverse $p_{inv}$ of a first value $p$ with reference to a second value $q$ as a module in connection with a probabilistic prime number test of the second value $q$,
**characterized in that** the apparatus is adapted to carry out, within the framework of a key generation process, an exponentiation the base of which depends on the first value $p$ and the exponent of which depends on the second value $q$, and the result of this exponentiation or a value derived therefrom is used as intermediate value both for determining the modular inverse $p_{inv}$ of the first value $p$ and for the probabilistic prime number test of the second value $q$.

**2.** The apparatus according to claim 1, **characterized in that** the probabilistic prime number test is a test round of the Miller-Rabin test.

**3.** The apparatus according to claim 1 or claim 2, **characterized in that** the first value $p$ is a random prime number, and that the first value $p$ or a value dependent thereon is employed as random number in the probabilistic prime number test.

**4.** The apparatus according to any of the claims 1 to 3, **characterized in that** in the probabilistic prime number test a multiplication of the intermediate value is executed with the base of the exponentiation, and that it is checked whether the result of this multiplication is a predetermined value or one of several predetermined values.

**5.** The apparatus according to any of the claims 1 to 4, **characterized in that** the second value $q$ is a prime number, and that the modular inverse $p_{inv}$ is computed as $p_{inv} = p^{q-2}$ mod $q$ employing Fermat's little theorem.

**6.** The apparatus according to any of the claims 1 to 5, **characterized in that** in the exponentiation for a value $p'$, the difference of which to $p$ is either zero or an integral multiple of $q$, the value $p'^{(q-3)/2}$ mod $q$ is computed.

**7.** The apparatus according to any of the claims 1 to 5, **characterized in that** at least in the exponentiation Montgomery multiplications are executed.

**8.** The apparatus according to claim 7, **characterized**

**in that** before the exponentiation, a Montgomery transformation of the first value $p$ is executed, and that the result of the exponentiation or a value dependent thereon is subjected to an inverse Montgomery transformation.

9. The apparatus according to claim 7 or claim 8, **characterized in that** the result of the exponentiation is subjected to an inverse Montgomery transformation, the result of which is used both for determining the modular inverse $p_{inv}$ of the first *value p* and for the probabilistic prime number test of the second value $q$.

10. The apparatus according to any of the claims 7 to 9, **characterized in that** in the exponentiation any one of the values $p^{(q-3)/2}$ mod $q$ or $R \cdot p^{(q-3)/2}$ mod $q$ or $R \cdot (p \cdot R^{-1})^{(q-3)/2}$ mod $q$ or $(p \cdot R^{-1})^{(q-3)/2}$ mod $q$ is computed, wherein $R$ is a parameter of the Montgomery multiplications executed in the exponentiation.

11. The apparatus according to any of the claims 1 to 10, **characterized in that** the exponentiation is executed modulo of the second value $q$ or modulo of a value dependent on the second value $q$.

12. The apparatus according to any of the claims 1 to 11 in the form of a portable data carrier.

13. A method for determining a modular inverse $p_{inv}$ of a first value $p$ with reference to a second value $q$ as a module in connection with a probabilistic prime number test of the second value $q$, wherein the method is executed on a processor within the framework of a key generation process, **characterized in that** an exponentiation is carried out the base of which depends on the first value $p$, and the exponent of which depends on the second value $q$, and that the result of this exponentiation or a value derived therefrom is used as intermediate value both for determining the modular inverse $p_{inv}$ of the first value $p$ and for the probabilistic prime number test of the second value $q$.

14. The method according to claim 13, **characterized in that** the method serves to determine at least one parameter of an RSA-CRT key.

15. A computer program product stored on a memory medium, having a plurality of program commands causing at least one processor (54, 56, 56', 56'', 56''') to execute a method according to any of the claims 13 or 14.

**Revendications**

1. Dispositif comprenant au moins un processeur (54, 56, 56', 56'', 56''') et au moins une mémoire (60, 64, 66, 68), le dispositif étant configuré pour déterminer un inverse modulaire $p_{inv}$ d'une première valeur $p$ relativement à une deuxième valeur $q$ en tant que module en corrélation avec un test de primalité probabiliste de la deuxième valeur $q$, **caractérisé en ce que** le dispositif est configuré pour, dans le cadre d'un processus de génération de clé, exécuter un calcul de puissance dont la base dépend de la première valeur $p$ et dont l'exposant dépend de la deuxième valeur $q$, et exploiter le résultat de ce calcul de puissance ou une valeur en étant dérivée en tant que valeur intermédiaire tant pour la détermination de l'inverse modulaire $p_{inv}$ de la première valeur $p$ que pour le test de.primalité probabiliste de la deuxième valeur $q$ .

2. Dispositif selon la revendication 1, **caractérisé en ce que** le test de primalité probabiliste est un cycle de tests d'un test de Miller-Rabin.

3. Dispositif selon la revendication 1 ou la revendication 2, **caractérisé en ce que** la première valeur $p$ est un nombre premier aléatoire, et **en ce que** la première valeur $p$ ou une valeur en étant dérivée est utilisée en tant que nombre aléatoire dans le test de primalité probabiliste.

4. Dispositif selon une des revendications de 1 à 3, **caractérisé en ce que**, lors du test de primalité probabiliste, une multiplication de la valeur intermédiaire avec la base du calcul de puissance est effectuée, et **en ce qu'**il est examiné si le résultat de cette multiplication est une valeur prédéterminée ou une de plusieurs valeurs prédéterminées.

5. Dispositif selon une des revendications de 1 à 4, **caractérisé en ce que** la deuxième valeur $q$ est un nombre premier, et **en ce que** l'inverse modulaire $p_{inv}$ est calculé en se servant du petit théorème de Fermat en tant que $p_{inv} = p^{q-2}$ mod $q$.

6. Dispositif selon une des revendications de 1 à 5, **caractérisé en ce que**, lors du calcul de puissance pour une valeur $p'$ dont la différence par rapport à $p$ est soit zéro, soit un multiple entier de $q$, la valeur $p'^{(q-3)/2}$ mod $q$ est calculée.

7. Dispositif selon une des revendications de 1 à 5, **caractérisé en ce que**, au moins lors du calcul de puissance, des multiplications de Montgomery sont effectuées.

8. Dispositif selon la revendication 7, **caractérisé en ce que**, avant le calcul de puissance, une transformation de Montgomery de la première valeur $p$ est effectuée, et **en ce que** le résultat du calcul de puissance ou une valeur en dépendant est soumis à une transformation de Montgomery inverse.

9. Dispositif selon la revendication 7 ou la revendication 8, **caractérisé en ce que** le résultat du calcul de puissance est soumis à une transformation de Montgomery inverse dont le résultat est exploité tant pour la détermination de l'inverse modulaire $p_{inv}$ de la première valeur $p$ que pour le test de primalité probabiliste de la deuxième valeur $q$.

10. Dispositif selon une des revendications de 7 à 9, **caractérisé en ce que**, lors du calcul de puissance d'une des valeurs, $p^{(q-3)/2} \bmod q$ ou $R \cdot p^{(q-3)/2} \bmod q$ ou $R \cdot (p \cdot R^{-1})^{(q-3)/2} \bmod q$ ou $(p \cdot R^{-1})^{(q-3)/2} \bmod q$ est calculé, $R$ étant un paramètre des multiplications de Montgomery effectuées lors du calcul de puissance.

11. Dispositif selon une des revendications de 1 à 10, **caractérisé en ce que** le calcul de puissance est effectué modulo la deuxième valeur $q$ ou modulo une valeur dépendante de la deuxième valeur $q$.

12. Dispositif selon une des revendications de 1 à 11 sous forme d'un support de données portable.

13. Procédé de détermination d'un inverse modulaire $p_{inv}$ d'une première valeur $p$ relativement à une deuxième valeur $q$ en tant que module en corrélation avec un test de primalité probabiliste de la deuxième valeur $q$, ce procédé étant effectué sur un processeur dans le cadre d'un processus de génération de clé,
**caractérisé en ce qu'**un calcul de puissance est exécuté, dont la base dépend de la première valeur $p$ et dont l'exposant dépend de la deuxième valeur $q$, et **en ce que** le résultat de ce calcul de puissance ou une valeur en étant dérivée est exploité(e) en tant que valeur intermédiaire tant pour la détermination de l'inverse modulaire $p_{inv}$ de la première valeur $p$ que pour le test de primalité probabiliste de la deuxième valeur $q$.

14. Procédé selon la revendication 13, **caractérisé en ce que** ce procédé sert à la détermination d'au moins un paramètre d'une clé RSA-CRT.

15. Produit programme d'ordinateur mémorisé sur un support mémoire et comportant une pluralité d'instructions de programme qui amènent au moins un processeur (54, 56, 56', 56", 56"') à effectuer un procédé selon une des revendications 13 ou 14.

Fig. 1

**BESTIMME PRIMZAHLKANDIDAT**

10 / 24

42 NICHT-LEERES KANDIDATENFELD VORHANDEN ?

NEIN

JA

44 ERZEUGE ZUFÄLLIGEN BASISWERT

B

46 ERZEUGE KANDIDATENFELD MITTELS SIEB DES ERATOSTHENES

S[i]

48 WÄHLE PRIMZAHLKANDIDAT AUS KANDIDATENFELD AUS

M

**Fig. 2**

50

54

56
(56'/ 56''/ 56''')

58

62

52

70

64

66

68

60

**Fig. 3**

KOMBINIERTES
TEST- UND
INVERSIONS-
VERFAHREN

$P' := P \bmod Q$ ~72

$X := P'^{(Q-3)/2} \bmod Q$ ~74

78

$X \cdot P' = \pm 1 \bmod Q$ ? —— NEIN

JA

$P_{INV} := X \cdot X \cdot P' \bmod Q$ ~86

Q IST ZUSAMMENGESETZT

36

34

P

P', Q

P', Q, X

P', Q, X

$P_{INV}$

Q

Fig. 4

34

Q

KOMBINIERTES TEST- UND
INVERSIONSVERFAHREN

P

$$P' := R \cdot P \ MOD \ Q \qquad \sim 72'$$

P', Q

$$X := \underbrace{P' *_Q P' *_Q \ldots *_Q P'}_{(Q-3)/2 \ FAKTOREN} \qquad \sim 74'$$

78'

P', Q, X

$$Y_1 := X *_Q P' \qquad \sim 80'$$

P', Q, X, Y₁

$$Y_2 := Y_1 *_Q 1 \qquad \sim 82'$$

$Y_2$

P', Q, X

$Y_2 = \pm 1 \ ?$    NEIN

84'

JA

36

Q IST ZUSAMMENGESETZT

88'

$$Z_1 := X *_Q X \qquad \sim 88'$$

P', Q, Z₁

$$Z_2 := Z_1 *_Q P' \qquad \sim 90'$$

Q, Z₂

$$P_{INV} := Z_2 *_Q 1 \qquad \sim 92'$$

86'

$P_{INV}$

Q

## Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4405829 A
- DE 102004044453 A1
- EP 1564649 A2
- WO 2004032411 A1

**In der Beschreibung aufgeführte Nicht-Patentliteratur**

- **PETER L. MONTGOMERY.** Modular multiplication without trial division. *Mathematics of Computation,* April 1985, vol. 44 (170), 519-521
- **MICHAEL O. RABIN.** Probabilistic algorithms for testing primality. *Journal of Number Theory,* 1980, vol. 12, 128-138